# EUROPEAN PATENT APPLICATION

(11) **EP 4 541 637 A1**
(43) Date of publication of application: **23.04.2025**
(21) Application number: 23823527.9
(22) Date of filing: 21.04.2023
(51) Int. Cl.: B60L 50/53, B60L 5/00, B60L 50/60, B60L 53/12, B60L 58/10, B60L 58/12, B60M 7/00, H02J 7/00, H02J 50/12

(54) **VEHICLE, POWER SUPPLY DEVICE AND POWER SUPPLY METHOD**

(30) Priority: 16.06.2022 JP 2022097601
(71) Applicant: DENSO CORPORATION, Kariya-shi, Aichi 448-8661 (JP)
(72) Inventor: HASHIMOTO, Toshiya, Toyota-shi, Aichi 471-8571 (JP); KIMURA, Kazutaka, Toyota-shi, Aichi 471-8571 (JP); HASHIMOTO, Makoto, Toyota-shi, Aichi 471-8571 (JP); KANESAKI, Masaki, Kariya-shi, Aichi 448-8661 (JP); TANI, Keisuke, Kariya-shi, Aichi 448-8661 (JP); YAMAGUCHI, Nobuhisa, Kariya-shi, Aichi 448-8661 (JP); OBAYASHI, Kazuyoshi, Kariya-shi, Aichi 448-8661 (JP); TAKEMURA, Yuichi, Kariya-shi, Aichi 448-8661 (JP)
(74) Representative: TBK
(86) International application number: PCT/JP2023/015973
(87) International publication number: WO 2023/243224

(57) **Abstract**

A vehicle (1) is provided with a battery (3) configured to store electric power; a power receiving apparatus (2) provided with a power receiving coil (22) for receiving electric power from a power transmitting coil (44) provided at a road; a motor (4) configured to output drive power of the vehicle; an electric power supply circuit (5) configured to supply electric power from at least one of the battery and the power receiving apparatus to the motor; and a control device (10) configured to control the supply of electric power to the motor. The control device is further configured to select a source of supply of electric power to the motor from the battery and the power receiving apparatus in accordance with whether the vehicle is running in a power supply area at which the power transmitting coil is provided.

## Description

### FIELD

The present invention relates to a vehicle, electric power supply apparatus, and electric power supply method.

### BACKGROUND

Known in the past has been the art of using a transmission system such as a magnetic resonance system to transmit electric power by noncontact. For example, Japanese Unexamined Patent Publication No. 2021-129432 describes to transmit electric power from a power transmitting coil provided at a road surface to a power receiving coil provided at a vehicle and to use that electric power to charge a battery of the vehicle while the vehicle is running.

### SUMMARY

### [TECHNICAL PROBLEM]

In this regard, when the allowable charged electric power of the battery is small, it is not possible to supply the electric power transmitted to the vehicle to the battery. Therefore, it may be considered to directly supply the electric power received by the power receiving apparatus of the vehicle to the drive motor of the vehicle without going through the battery. However, if there are two options of the battery and the power receiving apparatus as the source of supply of electric power to the motor, it is necessary to suitably select which to use in accordance with the running environment of the vehicle etc.

Therefore, in consideration of the above problem, an object of the present invention is to suitably select the source of supply of electric power to the motor in a vehicle configured so as to be supplied with power by noncontact from a power transmitting coil provided at a road.

### [SOLUTION TO PROBLEM]

The gist of the present disclosure is as follows:
(1) A vehicle, the vehicle comprising: a battery configured to store electric power; a power receiving apparatus provided with a power receiving coil for receiving electric power from a power transmitting coil provided at a road; a motor configured to output drive power of the vehicle; an electric power supply circuit configured to supply electric power from at least one of the battery and the power receiving apparatus to the motor; and a control device configured to control the supply of electric power to the motor, wherein the control device is further configured to select a source of supply of electric power to the motor from the battery and the power receiving apparatus in accordance with whether the vehicle is running in a power supply area at which the power transmitting coil is provided.
(2) The vehicle according to the above (1), wherein the control device is further configured to select only the power receiving apparatus as the source of supply of electric power when the vehicle is running in the power supply area.
(3) The vehicle according to the above (1), wherein the control device is further configured to select only the power receiving apparatus as the source of supply of electric power when the vehicle is running in the power supply area and a consumed electric power of the motor is less than or equal to a predetermined value and to select the battery and the power receiving apparatus as the source of supply of electric power when the consumed electric power is greater than the predetermined value.
(4) The vehicle according to the above (2) or (3), wherein the control device is further configured to select only the battery as the source of supply of electric power even when the vehicle is running in the power supply area, if trouble arises in supply of power to the vehicle.
(5) The vehicle according to any one of the above (1) to (3), wherein the control device is further configured to supply electric power from the power receiving apparatus to the motor and the battery when selecting only the power receiving apparatus as the source of supply of electric power and the amount of power supplied to the vehicle is greater than the electric power consumed by the motor.
(6) The method of supply of electric power to a motor for outputting drive power of a vehicle, in which electric power supply method, the vehicle comprising: a battery for storing electric power; a power receiving apparatus having a power receiving coil for receiving electric power from a power transmitting coil provided at a road; and an electric power supply circuit configured so as to supply electric power from at least one of the battery and the power receiving apparatus to the motor, the electric power supply method comprising selecting a source of supply of electric power to the motor from the battery and the power receiving apparatus in accordance with whether the vehicle is running in a power supply area at which the power transmitting coil is provided.
(7) An electric power supply apparatus mounted in a vehicle, wherein, the vehicle comprises: a battery for storing electric power; a power receiving apparatus having a power receiving coil for receiving electric power from a power transmitting coil provided at a road; a motor for outputting drive power of the vehicle; and an electric power supply circuit configured so as to supply electric power from at least one of the battery and the power receiving apparatus to the motor, and the electric power supply apparatus is configured to select a source of supply of electric power to the motor from the battery and the power receiving apparatus in accordance with whether the vehicle is running in a power supply area at which the power transmitting coil is provided.
(8) The electric power supply apparatus according to the above (7), further configured to select only the power receiving apparatus as the source of supply of electric power when the vehicle is running in the power supply area.
(9) The electric power supply apparatus according to the above (7), further configured to select only the power receiving apparatus as the source of supply of electric power when the vehicle is running in the power supply area and a consumed electric power of the motor is less than or equal to a predetermined value and to select the battery and the power receiving apparatus as the source of supply of electric power when the consumed electric power is greater than the predetermined value.
(10) The electric power supply apparatus according to the above (8) or (9), wherein the vehicle selects only the battery as the source of supply of electric power even when the vehicle is running in the power supply area, if trouble arises in supply of power to the vehicle.
(11) The electric power supply apparatus according to any one of the above (7) to (9), further configured to supply electric power from the power receiving apparatus to the motor and the battery when selecting only the power receiving apparatus as the source of supply of electric power and the amount of power supplied to the vehicle is greater than the electric power consumed by the motor.

### [ADVANTAGEOUS EFFECT OF INVENTION]

According to the present invention, it is possible to suitably select a source of supply of electric power to a motor in a vehicle configured so as to be supplied with power by noncontact from a power transmitting coil provided at a road.

### DESCRIPTION OF DRAWINGS

FIG. 1 is a view schematically showing the configuration of a noncontact power supply system.
FIG. 2 is a circuit diagram showing a path of supply of electric power in a vehicle.
FIG. 3 is a view schematically showing the configuration of an ECU of a vehicle and equipment connected to the ECU.
FIG. 4 is a view showing one example of a power supply area at which power transmitting coils of power supply apparatuses are installed.
FIG. 5 is a view showing a plurality of states of switching elements set by the ECU in a first embodiment.
FIG. 6 is a flow chart showing a control routine of the processing for supply of electric power in the first embodiment.
FIG. 7 is a view showing a plurality of states of switching elements set by the ECU in a second embodiment.
FIG. 8 is a flow chart showing a control routine of the processing for supply of electric power in the second embodiment.
FIG. 9 is a view showing a plurality of states of switching elements set by the ECU in a third embodiment.
FIG. 10 is a flow chart showing a control routine of the processing for supply of electric power in the third embodiment.

### DESCRIPTION OF EMBODIMENTS

Below, referring to the drawings, embodiments of the present invention will be explained in detail. Note that, in the following explanation, similar component elements will be assigned the same reference notations.

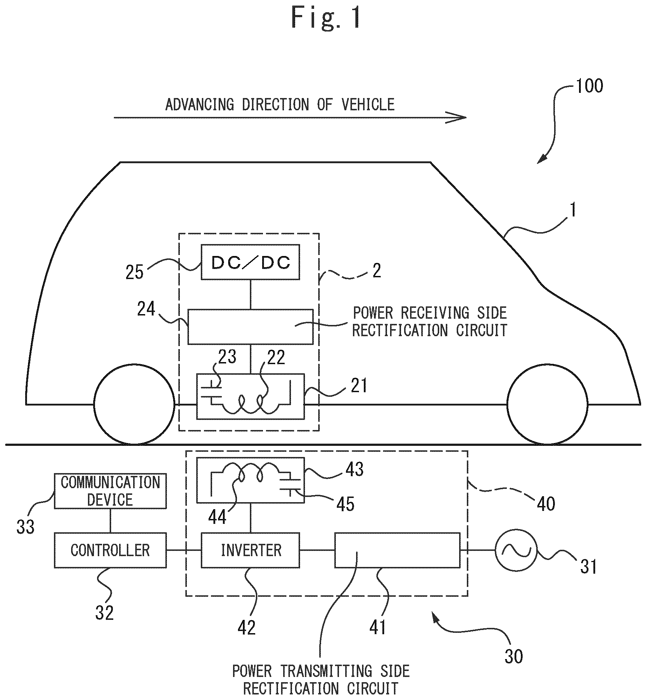

First, the configuration for using a power supply apparatus to supply electric power by noncontact will be explained. FIG. 1 is a view schematically showing the configuration of a noncontact power supply system 100. The noncontact power supply system 100 is comprised of a power supply apparatus 30 and a vehicle 1 and supplies power by noncontact between the power supply apparatus 30 and the vehicle 1. In particular, in the present embodiment, the noncontact power supply system 100 supplies power by noncontact from the power supply apparatus 30 to the vehicle 1 by magnetic resonant coupling (magnetic resonance) when the vehicle 1 is running. That is, the noncontact power supply system 100 transmits electric power from the power supply apparatus 30 to the vehicle 1 using a magnetic field as a medium. Note that, noncontact power supply is also referred to as noncontact electric power transmission, wireless electric power transmission, and wireless power supply.

The power supply apparatus 30 is configured so as to supply electric power by noncontact to the vehicle 1. Specifically, as shown in FIG. 1, the power supply apparatus 30 is provided with a power supply 31, controller 32, communication device 33, and power transmission device 40. In the present embodiment, the power supply apparatus 30 is provided at a road (lane) on which the vehicle 1 is running and, for example, is buried in the ground (below road surface). Note that, at least part of the power supply apparatus 30 (for example, the power supply 31, controller 32, and communication device 33) may be installed on the road surface.

The power supply 31 is a source of electric power of the power transmission device 40 and supplies electric power to the power transmission device 40. The power supply 31 is, for example, a commercial AC power supply for supplying single-phase AC electric power. Note that, the power supply 31 may be an AC power supply for supplying three-phase AC electric power etc.

The power transmission device 40 is configured so as to generate an AC magnetic field for transmitting electric power to the vehicle 1. In the present embodiment, the power transmission device 40 is provided with a power transmitting side rectification circuit 41, inverter 42, and power transmitting side resonance circuit 43. In the power transmission device 40, suitable AC electric power (high frequency electric power) is supplied through the power transmitting side rectification circuit 41 and inverter 42 to the power transmitting side resonance circuit 43.

The power transmitting side rectification circuit 41 is electrically connected to the power supply 31 and inverter 42. The power transmitting side rectification circuit 41 rectifies the AC electric power supplied from the power supply 31 to convert it to DC electric power and supplies the DC electric power to the inverter 42. The power transmitting side rectification circuit 41 is for example an AC/DC converter.

The inverter 42 is electrically connected to the power transmitting side rectification circuit 41 and power transmitting side resonance circuit 43. The inverter 42 converts the DC electric power supplied from the power transmitting side rectification circuit 41to AC electric power of a higher frequency than the AC electric power of the power supply 31 (high frequency electric power) and supplies the high frequency electric power to the power transmitting side resonance circuit 43.

The power transmitting side resonance circuit 43 has a resonator comprised of a power transmitting coil 44 and power transmitting side capacitor 45. The various parameters of the power transmitting coil 44 and power transmitting side capacitor 45 (outside diameter and inside diameter of power transmitting coil 44, number of turns of power transmitting coil 44, electrostatic capacitance of power transmitting side capacitor 45, etc.) are set so that the resonance frequency of the power transmitting side resonance circuit 43 becomes a predetermined setting. The predetermined setting is, for example, 10 kHz to 100 GHz, preferably it is 85 kHz set by the SAE TIR J2954 standard as the frequency band for noncontact power supply of a vehicle.

The power transmitting side resonance circuit 43 is arranged at the center of the lane in which the vehicle 1 is running so that the center of the power transmitting coil 44 is positioned at the center of the lane. If the high frequency electric power supplied from the inverter 42 is applied to the power transmitting side resonance circuit 43, the power transmitting side resonance circuit 43 makes an AC magnetic field be generated for transmitting electric power to the vehicle 1. Note that, the power supply 31 may also be a DC power supply such as a fuel cell or solar cell. In this case, the power transmitting side rectification circuit 41 may be omitted. Further, between the inverter 42 and the power transmitting side resonance circuit 43, a filter circuit suppressing high frequency noise generated from the inverter 42 may also be provided.

The controller 32 is, for example, a general use computer and performs various control of the power supply apparatus 30. For example, the controller 32 is electrically connected to the inverter 42 of the power transmission device 40 and controls the inverter 42 so as to control power transmission by the power transmission device 40.

The communication device 33 is a device for enabling communication between the power supply apparatus 30 and the outside of the power supply apparatus 30. For example, the communication device 33 includes a short range wireless communication module (for example, DSRC (dedicated short range communication) antenna, Bluetooth ^{™} module, etc.) for performing short range wireless communication and long range wireless communication module for performing long range wireless communication. The communication device 33 is electrically connected to the controller 32. The controller 32 uses the communication device 33 to communicate with the vehicle 1.

On the other hand, the vehicle 1 is provided with a power receiving apparatus 2 and is configured so as to be supplied with power by noncontact by the power supply apparatus 30. In the present embodiment, the power receiving apparatus 2 has a power receiving side resonance circuit 21, power receiving side rectification circuit 24, and DC/DC converter 25.

The power receiving side resonance circuit 21 is arranged at the floor part of the vehicle 1 so that the distance from the road surface becomes shorter. In the present embodiment, the power receiving side resonance circuit 21 is arranged at the center of the vehicle 1 in the vehicle width direction and is arranged between the front wheels and rear wheels in the front-rear direction of the vehicle 1.

The power receiving side resonance circuit 21 is configured in the same way as the power transmitting side resonance circuit 43 and has a resonator comprised of a power receiving coil 22 and power receiving side capacitor 23. The various parameters of the power receiving coil 22 and power receiving side capacitor 23 (outside diameter and inside diameter of power receiving coil 22, number of turns of power receiving coil 22, electrostatic capacitance of power receiving side capacitor 23, etc.) are set so that the resonance frequency of the power receiving side resonance circuit 21 matches the power transmitting side resonance circuit 43. Note that, if the amount of deviation of the resonance frequency of the power receiving side resonance circuit 21 and the resonance frequency of the power transmitting side resonance circuit 43 is small, for example, if the resonance frequency of the power receiving side resonance circuit 21 is within a range of ±20% of the resonance frequency of the power transmitting side resonance circuit 43, there is no need for the resonance frequency of the power receiving side resonance circuit 21 to necessarily match the resonance frequency of the power transmitting side resonance circuit 43.

As shown in FIG. 1, when the power receiving coil 22 of the power receiving side resonance circuit 21 faces the power transmitting coil 44 of the power transmitting side resonance circuit 43, if an AC magnetic field is emitted from the power transmitting coil 44, the vibration of the AC magnetic field is transmitted to the power receiving side resonance circuit 21 resonating at the same resonance frequency as the power transmitting side resonance circuit 43. As a result, due to electromagnetic induction, an induction current flows to the power receiving coil 22 of the power receiving side resonance circuit 21. Due to the induction current, electric power is generated. That is, the power receiving coil 22 receives electric power from the power transmitting coil 44 provided at the road.

The power receiving side rectification circuit 24 is electrically connected to the power receiving side resonance circuit 21 and DC/DC converter 25. The power receiving side rectification circuit 24 rectifies the AC electric power supplied from the power receiving side resonance circuit 21 to convert it to DC electric power and supplies the DC electric power to the DC/DC converter 25. The power receiving side rectification circuit 24 is for example an AC/DC converter. Note that, between the power receiving side resonance circuit 21 and the power receiving side rectification circuit 24, a filter circuit for eliminating noise of the AC electric power may also be provided.

The DC/DC converter 25 is electrically connected to the power receiving side rectification circuit 24. The DC/DC converter 25 converts the voltage value of the DC electric power output from the power receiving side rectification circuit 24. The DC/DC converter 25 is a back DC/DC converter (back converter), boost DC/DC converter (boost converter), or back boost DC/DC converter (back boost converter).

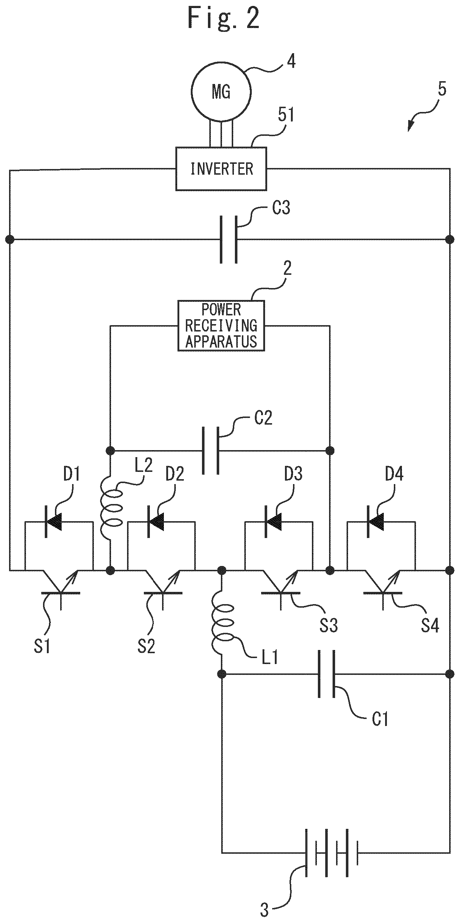

FIG. 2 is a circuit diagram showing the path of supply of electric power in the vehicle 1. As shown in FIG. 2, the vehicle 1 is provided with, in addition to the power receiving apparatus 2, a battery 3, motor 4, and electric power supply circuit 5.

The battery 3 stores electric power. The electric power stored in the battery 3 is consumed at the vehicle 1. The battery 3 is a rechargeable secondary battery, for example, a lithium ion battery, nickel-hydrogen, etc. If electric power is supplied from the power receiving apparatus 2 to the battery 3, the battery 3 is charged and the state of charge (SOC) of the battery 3 is restored. Further, the battery 3 can also be charged by an external power source other than the power supply apparatus 30 through a charging port provided at the vehicle 1.

The motor 4 is an electric motor (for example, AC synchronous motor) and is driven using electric power as a power source. The output of the motor 4 is transmitted through a decelerator and shaft to the wheels. That is, the motor 4 outputs drive power of the vehicle 1. In the present embodiment, the motor 4 is a motor-generator functioning as a motor and a generator. Therefore, at the time of deceleration of the vehicle 1, the motor 4 is driven by operation of the vehicle 1. The motor 4 uses the deceleration energy of the vehicle 1 to generate regenerative electric power. Further, in the present embodiment, the vehicle 1 is a battery electric vehicle (BEV) not mounting an internal combustion energy. Only the motor 4 functions as a drive source of the vehicle 1.

The electric power supply circuit 5 is configured to supply electric power to the motor 4 from at least one of the battery 3 and the power receiving apparatus 2. In the present embodiment, the voltage of the power receiving apparatus 2 is higher than the voltage of the battery 3. As shown in FIG. 2, the electric power supply circuit 5 has an inverter 51, switching elements S1 to S4, diodes D1 to D4, coils L1, L2, and capacitors C1 to C3. Note that, the electric power supply circuit 5 may also be configured different from FIG. 2 so long as having a similar function.

The inverter 51 is electrically connected to the battery 3 and the power receiving apparatus 2 and motor 4. The inverter 51 is supplied with electric power from at least one of the battery 3 and the power receiving apparatus 2. The inverter 51 converts the DC electric power supplied to the inverter 51 to AC electric power and supplies the AC electric power to the motor 4. Therefore, electric power is supplied to the motor 4 from at least one of the battery 3 and the power receiving apparatus 2 through the inverter 51.

The electric power supply circuit 5 has a plurality of switching elements for switching the path of supply of electric power in the vehicle 1 (in particular, the path of supply of electric power to the motor 4). In the present embodiment, it has four switching elements S1 to S4. The switching elements S1 to S4 are, for example, comprised of IGBT (insulated gate bipolar transistors), MOS (metal oxide semiconductor) transistors, bipolar transistors, etc. As shown in FIG. 2, the switching elements S1 to S4 are connected in series with the inverter 51 and the motor 4, while the diodes D1 to D4 are respectively connected antiparallel to the switching elements S1 to S4.

Between the switching element S1 and the switching element S2, the positive terminal of the power receiving apparatus 2 is connected through the coil L2. Between the switching element S2 and the switching element S3, the positive terminal of the battery 3 is connected through the coil L1. Between the switching element S3 and the switching element S4, the negative terminal of the power receiving apparatus 2 is connected.

The capacitor C1 is connected in parallel with the battery 3. The capacitor C2 is connected in parallel with the power receiving apparatus 2. The capacitor C3 is connected in parallel with the inverter 51 and functions as a smoothing capacitor.

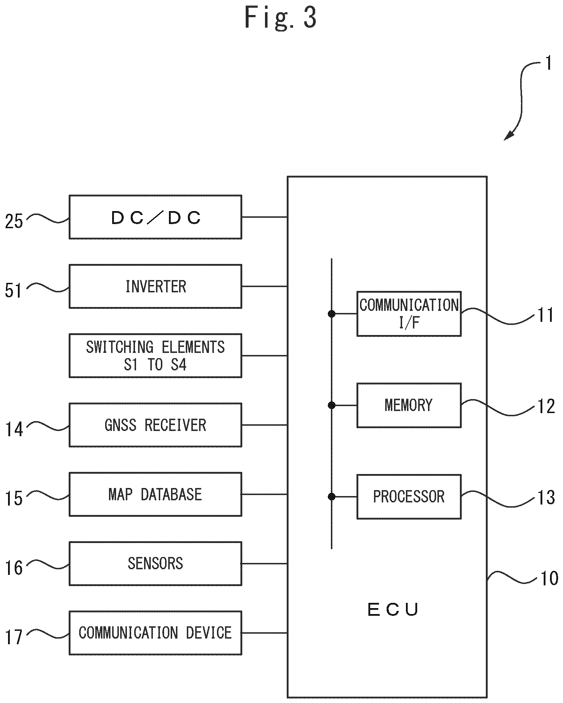

Further, the vehicle 1 is provided with an electronic control unit (ECU) as a control device of the vehicle 1. FIG. 3 is a schematic view of the configuration of the ECU 10 of the vehicle 1 and equipment connected to the ECU 10. The ECU 10 performs various control of the vehicle 1. The ECU 10 is one example of an electric power supply apparatus mounted in the vehicle 1.

As shown in FIG. 3, the ECU 10 has a communication interface 11, memory 12, and processor 13. The communication interface 11, memory 12, and processor 13 are connected with each other through signal wires.

The communication interface 11 is an interface circuit for connecting the ECU 10 to an internal vehicle network compliant with the CAN (Controller Area Network) or other standard.

The memory 12 has, for example, a volatile semiconductor memory (for example, a RAM) and a nonvolatile semiconductor memory (for example, a ROM). The memory 12 stores programs to be run on the processor 13 and various data etc. used when various processings are performed by the processor 13.

The processor 13 has one or more CPUs (central processing units) and their peripheral circuits and performs various processing. Note that, the processor 13 may further have processing circuits such as logical operation units and numerical operation units.

As shown in FIG. 3, the above-mentioned DC/DC converter 25, inverter 51, and switching elements S1 to S4 are electrically connected to the ECU 10. The ECU 10 controls the DC/DC converter 25, inverter 51, and switching elements S1 to S4 and controls the supply of electric power in the vehicle 1, in particular the supply of electric power to the motor 4.

Further, the vehicle 1 is provided with a GNSS (global navigation satellite system) receiver 14, map database 15, sensors 16, and communication device 17. These are electrically connected to the ECU 10.

The GNSS receiver 14 detects the current position of the vehicle 1 (for example, the latitude and longitude of the vehicle 1) based on the positioning information obtained from a plurality of (for example, three or more) positioning satellites. Specifically, the GNSS receiver 14 captures a plurality of positioning satellites and receives radio waves emitted from the positioning satellites. Further, the GNSS receiver 14 calculates the distances to the positioning satellites based on the difference between the times of emission and times of reception of the radio waves and detects the current position of the vehicle 1 based on the distances to the positioning satellites and positions of the positioning satellites (orbital information). The output of the GNSS receiver 14, that is, the current position of the vehicle 1 detected by the GNSS receiver 14, is transmitted to the ECU 10.

The map database 15 stores map information. The map information includes positional information etc. of a later explained power supply area. The ECU 10 acquires the map information from the map database 15. Note that, the map database is provided at the outside of the vehicle 1 (for example, a server etc.) The ECU 10 may also acquire map information from the outside of the vehicle 1.

The sensors 16 detect state quantities of the vehicle 1. For example, the sensors 16 include a battery current sensor for detecting the input/output current of the battery 3 etc. The outputs of the sensors 16, that is, the state quantities of the vehicle 1 detected by the sensors 16, are transmitted to the ECU 10.

The communication device 17 is a device for enabling communication between the vehicle 1 and the outside of the vehicle 1. For example, the communication device 17 includes a short range wireless communication module (for example, DSRC (dedicated short range communication) vehicle-mounted device, Bluetooth ^{™} module, etc.) for performing short range wireless communication and long range wireless communication module (for example, a data communication module (DCM) for performing long range wireless communication. The ECU 10 uses the communication device 17 to communicate with the power supply apparatus 30.

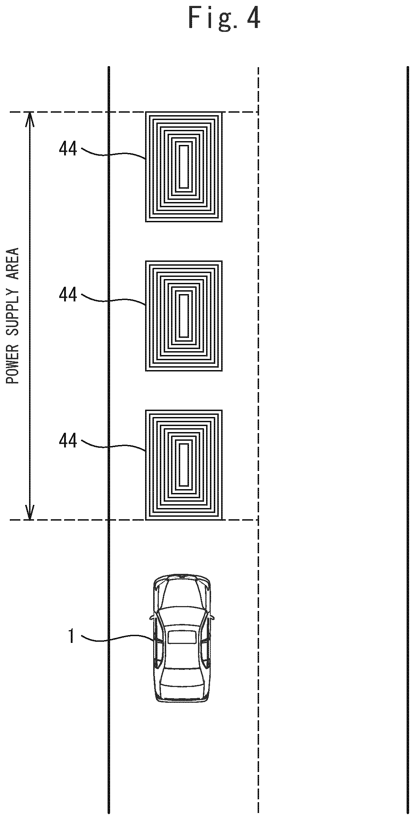

FIG. 4 is a view showing one example of a power supply area in which a power transmitting coil 44 of the power supply apparatus 30 is installed. In the example of FIG. 4, three power transmitting coils 44 are arranged separated from each other along the direction of advance of the vehicle 1 on the same lane of the road. The range on the lane at which the plurality of power transmitting coils 44 is consecutively arranged corresponds to a power supply area. Note that, there may also be another number of power transmitting coils 44 installed in a single power supply area (for example, just one).

For example, when the vehicle 1 has approached a power supply area, the ECU 10 uses the communication device 17 to send a power supply request signal for requesting the supply of power to the vehicle 1 to the power supply apparatus 30. If receiving a power supply request signal from the vehicle 1, the controller 32 of the power supply apparatus 30 makes the power transmission device 40 generate a power transmission use AC magnetic field. That is, if receiving a power supply request signal from the vehicle 1, the controller 32 starts the supply of power by noncontact from the power supply apparatus 30 to the vehicle 1.

By supplying electric power transmitted to the vehicle 1 by noncontact power supply to the battery 3, it is possible to charge the battery 3 while the vehicle 1 is running. However, when the allowable charging electric power of the battery 3 is small, it is not possible to supply electric power transmitted to the vehicle 1 to the battery 3. Therefore, it may be considered to directly supply the electric power which the power receiving apparatus 2 received to the motor 4 without going through the battery 3. However, if there are two options of selection of the battery 3 and the power receiving apparatus 2 as the source of supply of electric power to the motor 4, it is necessary to suitably selectively use these in accordance with the running environment etc. of the vehicle 1.

Therefore, in the present embodiment, the ECU 10 selects the source of supply of electric power to the motor 4 from the battery 3 and the power receiving apparatus 2 in accordance with whether the vehicle 1 is running in a power supply area at which a power transmission coil 44 is installed. Due to this, in a vehicle 1 configured so as to be supplied with power by noncontact from a power transmitting coil 44 provided at the road, it is possible to suitably select the source of supply of electric power to the motor 4.

For example, to reduce the loss of electric power in a vehicle 1, it is preferable to directly supply electric power from the power receiving apparatus 2 to the motor 4 without going through the battery 3. For this reason, in the present embodiment, the ECU 10 selects only the power receiving apparatus 2 as the source of supply of electric power to the motor 4 when the vehicle 1 is running in a power supply area and selects only the battery 3 as the source of supply of electric power to the motor 4 when the vehicle 1 is not running in a power supply area.

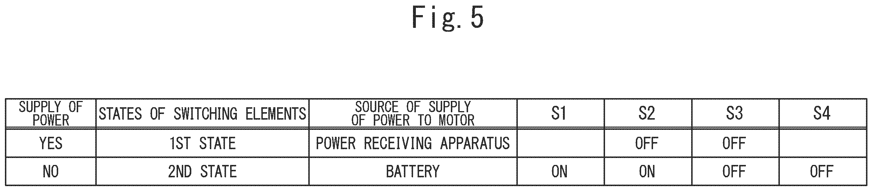

In the present embodiment, the ECU 10 controls the on/off states of the switching elements S1 to S4 so as to select the source of supply of electric power to the motor 4 from the battery 3 and the power receiving apparatus 2. FIG. 5 is a view showing several states of the switching elements S1 to S4 set by the ECU 10 in the first embodiment.

In the present embodiment, the ECU 10 switches the states of the switching elements S1 to S4 between a first state and a second state. In the first state, when power is being supplied to the vehicle 1, the switching elements S2 and S3 are turned off. As a result, electric power is supplied from the power receiving apparatus 2 to the inverter 51 and the motor 4 and the supply of electric power from the battery 3 to the inverter 51 and the motor 4 is cut off. That is, in the first state, the power receiving apparatus 2 is used as the source of supply of electric power to the motor 4. Note that, in the first state, the switching elements S1 and S4 are set to any states (on or off).

In the second state, when power is not being supplied to the vehicle 1, the switching elements S1 and S2 are turned on and the switching elements S3, S4 are turned off. As a result, electric power is supplied from the battery 3 to the inverter 51 and the motor 4 and the supply of electric power from the power receiving apparatus 2 to the inverter 51 and the motor 4 is cut off. That is, in the second state, only the battery 3 is used as the source of supply of electric power to the motor 4.

Further, even if the vehicle 1 had been positioned on a power supply area, sometimes power would not be normally supplied to the vehicle 1. For this reason, even when the vehicle 1 is running in a power supply area, if trouble arises in the supply of power to the vehicle 1, the ECU 10 selects only the battery 3 as the source of supply of electric power to the motor 4. By doing this, it is possible to avoid trouble in the supply of power from causing power supplied to the motor 4 to become insufficient.

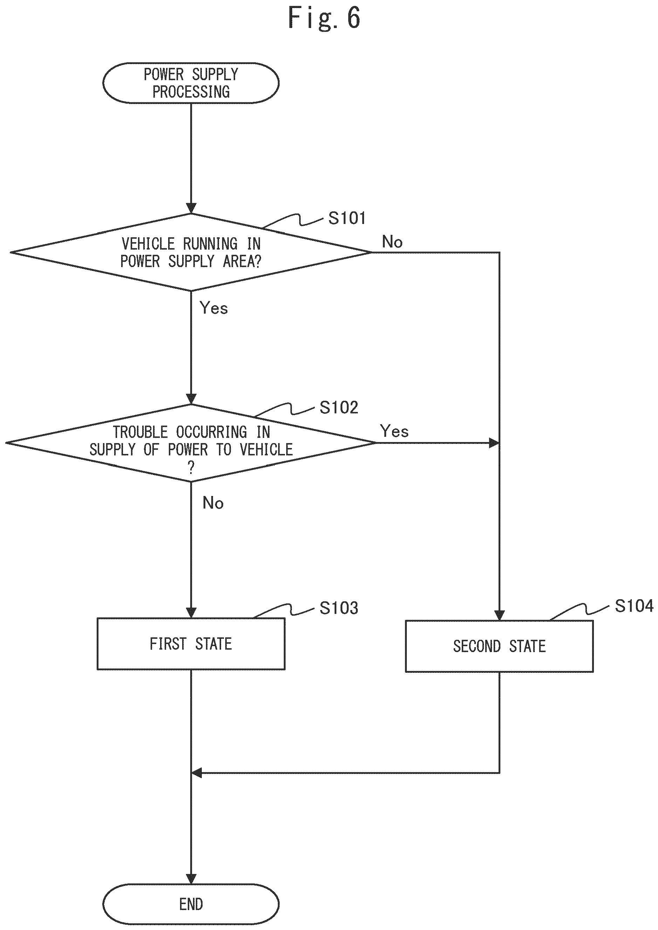

Below, referring to the flow chart of FIG. 6, the flow of control explained above will be explained. FIG. 6 is a flow chart showing the control routine of the processing for supply of electric power in the first embodiment. The present control routine is repeatedly performed by the ECU 10 at predetermined intervals.

First, at step S101, the ECU 10 judges whether the vehicle 1 is running in a power supply area. For example, the ECU 10 performs this judgment by comparing the current position of the vehicle 1 acquired based on the output of the GNSS receiver 14 against the positional information of power supply areas stored in the map information of the map database 15. Note that, ECU 10 may also judge that the vehicle 1 is running in a power supply area when the power receiving apparatus 2 of the vehicle 1 is receiving electric power.

If at step S101 it was judged that the vehicle 1 was running in a power supply area, the present control routine proceeds to step S101. At step S102, the ECU 10 judges whether trouble has occurred in the supply of power to the vehicle 1. For example, the ECU 10 judges that trouble has occurred in the supply of power to the vehicle 1 if at least one of the following abnormality conditions stands. If an abnormality condition stands, the supply of power from the power supply apparatus 30 to the vehicle 1 is suspended.

The first abnormality condition is an abnormality occurring in the power receiving apparatus 2 (for example, disconnection of the power receiving coil 22 etc.) For example, the ECU 10 judges that an abnormality has occurred in the power receiving apparatus 2 if electric power is not generated at the power receiving side resonance circuit 21 regardless of an AC magnetic field being emitted from the power transmitting coil 44. In this case, an abnormality in power supply is notified from the vehicle 1 to the power supply apparatus 30 and the power supply apparatus 30 suspends supply of power to the vehicle 1.

The second abnormality condition is positional deviation between the power receiving coil 22 and the power transmitting coil 44 in the vehicle width direction (horizontal deviation). For example, in the vehicle 1, tracking coils for detecting positional deviation between the power receiving coil 22 and the power transmitting coil 44 in the vehicle width direction are provided at both sides of the power receiving side resonance circuit 21 in the vehicle width direction. In this case, the tracking coils output electric signals or weak AC electric power emitted from the power transmission device 40 as detection signals. The ECU 10 detects positional deviation based on the detection signals of the two tracking coils. The results of detection of the positional deviation are sent from the vehicle 1 to the power supply apparatus 30. Note that, the power supply apparatus 30 may also detect positional deviation between the power receiving coil 22 and power transmitting coil 44 in the vehicle width direction and send the results of detection to the vehicle 1.

The third abnormality condition is the presence of a foreign object on the road in the power supply area. For example, the power supply apparatus 30 is provided with a foreign object detection sensor for detecting a foreign object on the power transmitting coil 44 (for example, a photoelectric sensor, camera, metal detector, etc.) and transmits the results of detection of foreign objects to the vehicle 1.

The fourth abnormality condition is a break in communication between the power supply apparatus 30 and the vehicle 1. For example, the ECU 10 judges that there has been a break in communication between the power supply apparatus 30 and the vehicle 1 if a predetermined notification is not sent from the power supply apparatus 30 to the vehicle 1.

Note that, conditions other than those mentioned above as abnormality conditions may also be used. Further, just some of the conditions mentioned above as abnormality conditions may also be used.

If it was judged at step S 102 that trouble had not arose in the supply of power to the vehicle 1, the present control routine proceeds to step S103. At step S103, the ECU 10 sets the states of the switching elements S1 to S4 of the electric power supply circuit 5 to the first state. That is, the ECU 10 selects only the power receiving apparatus 2 as the source of supply of electric power to the motor 4. After step S103, the present control routine ends.

On the other hand, if at step S101 it was judged that the vehicle 1 was not running in a power supply area or if at step S102, it was judged that trouble had occurred in the supply of power to the vehicle 1, the present control routine proceeds to step S104. At step S104, the ECU 10 sets the states of the switching elements S1 to S4 of the electric power supply circuit 5 to the second state. That is, the ECU 10 selects only the battery 3 as the source of supply of electric power to the motor 4. After step S104, the present control routine ends.

### <Second Embodiment>

The configuration and control of the vehicle according to the second embodiment are basically similar to the configuration and control of the vehicle according to the first embodiment except for the points explained below. For this reason, below, the second embodiment of the present invention will be explained focusing on the parts different from the first embodiment.

As explained above, when the vehicle 1 is running in a power supply area, the ECU 10 directly supplies electric power from the power receiving apparatus 2 to the motor 4. However, if the demanded torque of the vehicle 1 is large and the consumed electric power of the motor 4 is large, the electric power supplied to the motor 4 is liable to become insufficient with just the electric power received by the power receiving apparatus 2.

Therefore, in the second embodiment, when the vehicle 1 is running in a power supply area, the ECU 10 selects only the power receiving apparatus 2 as the source of supply of electric power to the motor 4 if the electric power consumed by the motor 4 is less than or equal to a predetermined value and selects the battery 3 and the power receiving apparatus 2 as the source of supply of electric power to the motor 4 if the electric power consumed by the motor 4 is greater than the predetermined value. By doing this, it is possible to keep the electric power supplied to the motor 4 from becoming insufficient in the power supply area.

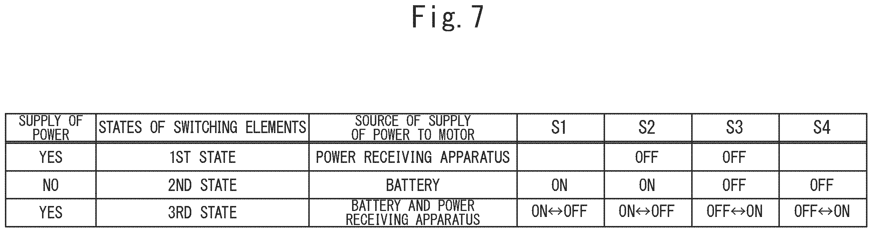

FIG. 7 is a view showing a plurality of states of the switching elements S1 to S4 set by the ECU 10 in the second embodiment. In the second embodiment, the ECU 10 switches the states of the switching elements S1 to S4 among a first state to a third state. As explained above, in a first state, only the power receiving apparatus 2 is used as the source of supply of electric power to the motor 4. In a second state, only the battery 3 is used as the source of supply of electric power to the motor 4.

In the third state, when power is being supplied to the vehicle 1, the switching elements S1 to S4 are respectively alternately switched between on and off. When the switching elements S1, S2 are set to on, the switching elements S3, S4 are set to off. As a result, the voltage of the battery 3 is boosted by the coil L1 and capacitor C1 to the voltage of the power receiving apparatus 2 and electric power is supplied from both of the battery 3 and the power receiving apparatus 2 to the motor 4. That is, in the third state, the battery 3 and the power receiving apparatus 2 are used as the source of supply of electric power to the motor 4.

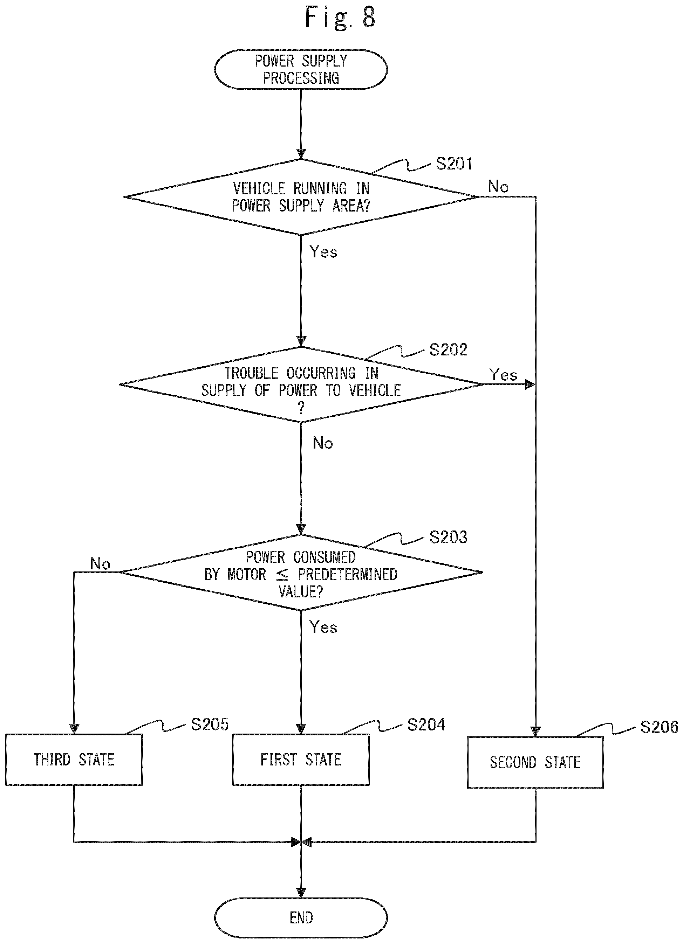

FIG. 8 is a flow chart of a control routine of the processing for supply of electric power in the second embodiment. The present control routine is repeatedly performed by the ECU 10 at predetermined intervals.

First, at step S201, in the same way as step S101 of FIG. 6, the ECU 10 judges whether the vehicle 1 is running in a power supply area. If it was judged that the vehicle 1 was running in a power supply area, the present control routine proceeds to step S202.

At step S202, in the same way as step S102 of FIG. 6, the ECU 10 judges whether trouble has occurred in the supply of power to the vehicle 1. If it was judged that trouble has not occurred in the supply of power to the vehicle 1, the present control routine proceeds to step S203.

At step S203, the ECU 10 judges whether the electric power consumed by the motor 4 is less than or equal to a predetermined value. The electric power consumed by the motor 4 is, for example, calculated based on the demanded torque of the vehicle 1, the electric power supplied to the motor 4, etc. The predetermined value is set to a predetermined fixed value or a value of less than or equal to the amount of power supplied to the vehicle 1 (for example, the amount of power supplied to the vehicle 1). The amount of power supplied to the vehicle 1 is notified from the power supply apparatus 30 to the vehicle 1 or is calculated based on the output of the current sensor, voltage sensor, etc. provided at the power receiving apparatus 2 of the vehicle 1.

On the other hand, if at step S203 it was judged that the electric power consumed by the motor 4 is less than or equal to the predetermined value, the present control routine proceeds to step S204. At step S204, the ECU 10 sets the states of the switching elements S1 to S4 of the electric power supply circuit 5 to the first state. That is, ECU 10 selects only the power receiving apparatus 2 as the source of supply of electric power to the motor 4. After step S204, the present control routine ends.

On the other hand, if at step S203 it was judged that the electric power consumed by the motor 4 is greater than the predetermined value, the present control routine proceeds to step S205. At step S205, the ECU 10 sets the states of the switching elements S1 to S4 of the electric power supply circuit 5 to the third state. That is, ECU 10 selects the battery 3 and the power receiving apparatus 2 as the source of supply of electric power to the motor 4. After step S205, the present control routine ends.

On the other hand, if at step S201 it is judged that the vehicle 1 is not running in a power supply area or if at step S202 it is judged that trouble has occurred in the supply of power to the vehicle 1, the present control routine proceeds to step S206. At step S206, the ECU 10 sets the states of the switching elements S1 to S4 of the electric power supply circuit 5 to the second state. That is, ECU 10 selects only the battery 3 as the source of supply of electric power to the motor 4. After step S206, the present control routine ends.

### <Third Embodiment>

The configuration and control of the vehicle according to the third embodiment are basically similar to the configuration and control of the vehicle according to the second embodiment except for the points explained below. For this reason, below, the third embodiment of the present invention will be explained focusing on the parts different from the second embodiment.

As explained above, the motor 4 is supplied with electric power from at least one of the battery 3 and the power receiving apparatus 2. However, if the demanded voltage of the motor 4 is high, the voltage supplied to the motor 4 is liable to not reach the demanded voltage.

Therefore, in the third embodiment, when the demanded voltage of the motor 4 is greater than or equal to a predetermined value, the ECU 10 boosts the voltage of the electric power supplied to the inverter 51 and the motor 4. Due to this, it is possible to keep the voltage of the motor 4 from becoming insufficient.

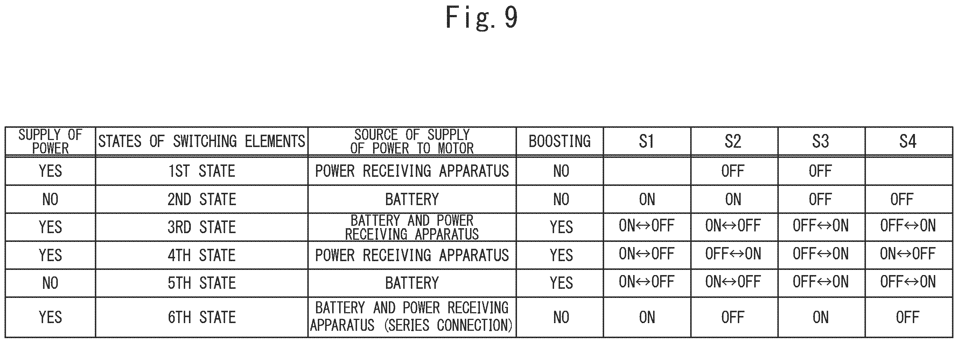

FIG. 9 is a view showing the plurality of states of the switching elements S1 to S4 set by the ECU 10 in the third embodiment. In the third embodiment, the ECU 10 switches the states of the switching elements S1 to S4 among a first state to a sixth state. As explained above, in the first state, only the power receiving apparatus 2 is used as the source of supply of electric power to the motor 4. In a second state, only the battery 3 is used as the source of supply of electric power to the motor 4. Further, in a third state, voltage of the battery 3 is boosted to the voltage of the power receiving apparatus 2, and the battery 3 and the power receiving apparatus 2 are used as the source of supply of electric power to the motor 4.

In a fourth state, when the vehicle 1 is being supplied with power, the switching elements S1 to S4 are respectively alternately switched between on and off. When the switching elements S1, S4 are set to on, the switching elements S2, S3 are set to off. As a result, the voltage of the power receiving apparatus 2 is boosted by the coil L2 and capacitor C2 and the boosted electric power is supplied from the power receiving apparatus 2 to the motor 4. That is, in the fourth state, the voltage of the power receiving apparatus 2 is boosted and only the power receiving apparatus 2 is used as the source of supply of electric power to the motor 4.

In a fifth state, when the vehicle 1 is not being supplied with power, the switching elements S1 to S4 are respectively alternately switched between on and off. When the switching elements S1, S2 are set to on, the switching elements S3, S4 are set to off. As a result, the voltage of the battery 3 is boosted by the coil L1 and capacitor C1 and the boosted electric power is supplied from the battery 3 to the motor 4. That is, in the fifth state, the voltage of the battery 3 is boosted and only the battery 3 is used as the source of supply of electric power to the motor 4.

When, in the sixth state, power is supplied to the vehicle 1, the switching elements S1, S3 are turned on and the switching elements S2, S4 are turned off. As a result, the battery 3 and the power receiving apparatus 2 are connected in series and high voltage electric power is supplied from the battery 3 and the power receiving apparatus 2 to the motor 4. That is, in the sixth state, as the source of supply of electric power to the motor 4, the series connected battery 3 and the power receiving apparatus 2 are used. In the sixth state, compared with the fourth state in which loss of electric power occurs due to a boost operation, it is possible to more efficiently supply high voltage electric power to the motor 4.

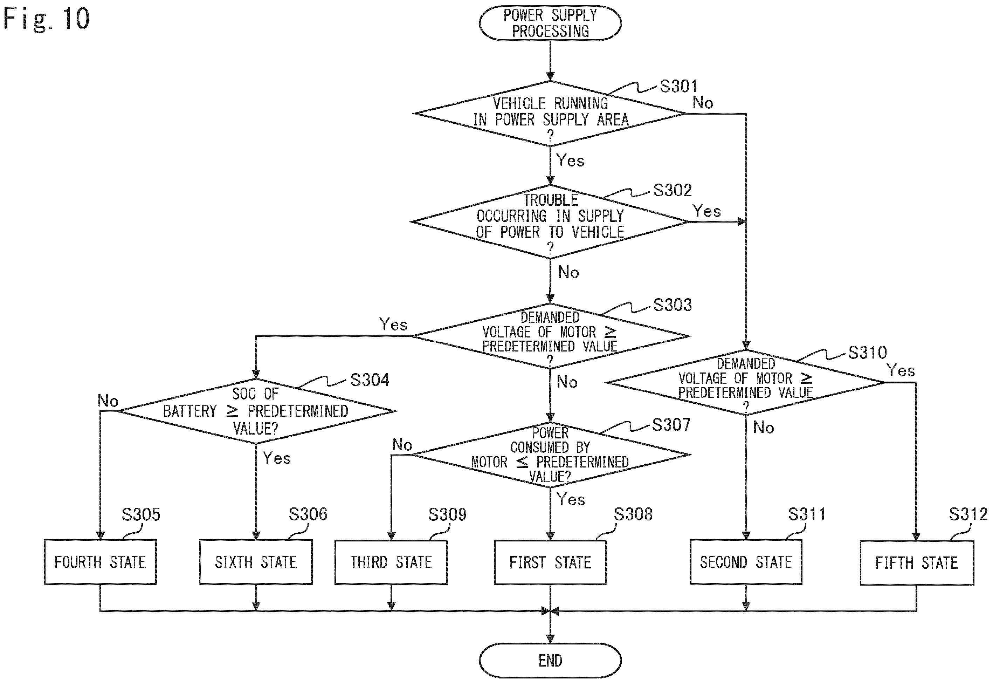

FIG. 10 is a flow chart showing a control routine of the processing for supply of electric power in the third embodiment. The present control routine is repeatedly performed by the ECU 10 at predetermined intervals.

First, at step S301, in the same way as step S101 of FIG. 6, the ECU 10 judges if the vehicle 1 is running in a power supply area. If it is judged that the vehicle 1 is running in a power supply area, the present control routine proceeds to step S302.

At step S302, in the same way as step S102 of FIG. 6, the ECU 10 judges if trouble has occurred in the supply of power to the vehicle 1. If it is judged that trouble has not occurred in the supply of power to the vehicle 1, the present control routine proceeds to step S303.

At step S303, the ECU 10 judges if the demanded voltage of the motor 4 is greater than or equal to a predetermined value. The demanded voltage of the motor 4 is, for example, calculated based on the speed and torque of the motor 4. If it is judged that the demanded voltage of the motor 4 is greater than or equal to the predetermined value, the present control routine proceeds to step S304.

At step S304, the ECU 10 judges if the SOC of the battery 3 is greater than or equal to a predetermined value. The SOC of the battery 3 is, for example, calculated by cumulatively adding the input/output currents of the battery 3 detected by the battery current sensor or is calculated using a status estimation method such as a Kalman filter. The predetermined value is, for example, set to 30% to 80%.

If at step S304 it was judged that the SOC of the battery 3 was less than the predetermined value, the present control routine proceeds to step S305. At step S305, the ECU 10 sets the states of the switching elements S1 to S4 of the electric power supply circuit 5 to the fourth state so as to supply high voltage electric power to the motor 4 without consuming the electric power of the battery 3. That is, the ECU 10 selects only the power receiving apparatus 2 as the source of supply of electric power to the motor 4 to boost the voltage of the power receiving apparatus 2. After step S305, the present control routine ends.

On the other hand, if at step S304 it was judged that the SOC of the battery 3 was greater than or equal to the predetermined value, the present control routine proceeds to step S306. At step S306, the ECU 10 sets the states of the switching elements S1 to S4 of the electric power supply circuit 5 to a sixth state. That is, the ECU 10 selects the power receiving apparatus 2 and the battery 3 connected in series as the source of supply of electric power to the motor 4. After step S306, the present control routine ends.

Further, if at step S303 it was judged that the demanded voltage of the motor 4 is less than a predetermined value, the present control routine proceeds to step S307. At step S307, in the same way as step S203 of FIG. 8, the ECU 10 judges whether the consumed electric power of the motor 4 is less than or equal to the predetermined value.

If at step S307 it was judged that the consumed electric power of the motor 4 was less than or equal to a predetermined value, the present control routine proceeds to step S308. At step S308, the ECU 10 sets the states of the switching elements S1 to S4 of the electric power supply circuit 5 to the first state. That is, the ECU 10 selects only the power receiving apparatus 2 as the source of supply of electric power to the motor 4. After step S308, the present control routine ends.

On the other hand, if at step S307 it was judged that the consumed electric power of the motor 4 was greater than the predetermined value, the present control routine proceeds to step S309. At step S309, the ECU 10 sets the states of the switching elements S1 to S4 of the electric power supply circuit 5 to the third state. That is, the ECU 10 selects the battery 3 and the power receiving apparatus 2 as the source of supply of electric power to the motor 4. After step S309, the present control routine ends.

Further, if at step S301 it was judged that the vehicle 1 was not running in a power supply area or if at step S302 it was judged that trouble occurred in the supply of power to the vehicle 1, the present control routine proceeds to step S310. At step S310, in the same way as step S303, the ECU 10 judges if the demanded voltage of the motor 4 is greater than or equal to a predetermined value. If it was judged that the demanded voltage of the motor 4 was less than the predetermined value, the present control routine proceeds to step S311. At step S311, the ECU 10 sets the states of the switching elements S1 to S4 of the electric power supply circuit 5 to the second state. That is, the ECU 10 selects only the battery 3 as the source of supply of electric power to the motor 4. After step S311, the present control routine ends.

On the other hand, if at step S310 it was judged that the demanded voltage of the motor 4 was greater than or equal to the predetermined value, the present control routine proceeds to step S312. At step S312, the ECU 10 sets the states of the switching elements S1 to S4 of the electric power supply circuit 5 to the fifth state. That is, the ECU 10 selects only the battery 3 as the source of supply of electric power to the motor 4 and boosts the voltage of the battery 3. After step S312, the present control routine ends.

### <Other Embodiments>

Above, preferred embodiments according to the present invention were explained, but the present invention is not limited to these embodiments and can be corrected and changed in various ways within the language of the claims. For example, the vehicle 1 may also be a hybrid electric vehicle (HEV) provided with an internal combustion engine and motor as the drive sources of the vehicle 1 or a plug-in hybrid electric vehicle (PHEV).

Further, when the states of the switching elements S1 to S4 are set to the first state, that is, when only the power receiving apparatus 2 is selected as the source of supply of electric power to the motor 4, if the amount of power supplied to the vehicle 1 is greater than the consumed electric power of the motor 4, the ECU 10 may supply electric power from the power receiving apparatus 2 to the motor 4 and the battery 3. Due to this, it is possible use excess electric power to charge the battery 3 and possible to keep down waste of electric power supplied to the vehicle 1. In this case, when the states of the switching elements S1 to S4 are set to the first state, the ECU 10 temporarily turns the switching element S2 on to thereby supply electric power from the power receiving apparatus 2 to the battery 3.

### REFERENCE SIGNS LIST

- 1: vehicle
- 2: power receiving apparatus
- 22: power receiving coil
- 3: battery
- 4: motor
- 5: electric power supply circuit
- 10: electronic control unit (ECU)
- 30: power supply apparatus
- 40: power transmission device
- 44: power transmitting coil

## Claims

1. A vehicle, the vehicle comprising:
a battery configured to store electric power;
a power receiving apparatus provided with a power receiving coil for receiving electric power from a power transmitting coil provided at a road;
a motor configured to output drive power of the vehicle;
an electric power supply circuit configured to supply electric power from at least one of the battery and the power receiving apparatus to the motor; and
a control device configured to control the supply of electric power to the motor,
wherein
the control device is further configured to select a source of supply of electric power to the motor from the battery and the power receiving apparatus in accordance with whether the vehicle is running in a power supply area at which the power transmitting coil is provided.

2. The vehicle according to claim 1, wherein
the control device is further configured to select only the power receiving apparatus as the source of supply of electric power when the vehicle is running in the power supply area.

3. The vehicle according to claim 1, wherein
the control device is further configured to select only the power receiving apparatus as the source of supply of electric power when the vehicle is running in the power supply area and a consumed electric power of the motor is less than or equal to a predetermined value and to select the battery and the power receiving apparatus as the source of supply of electric power when the consumed electric power is greater than the predetermined value.

4. The vehicle according to claim 2 or 3, wherein
the control device is further configured to select only the battery as the source of supply of electric power even when the vehicle is running in the power supply area, if trouble arises in supply of power to the vehicle.

5. The vehicle according to any one of claims 1 to 3, wherein
the control device is further configured to supply electric power from the power receiving apparatus to the motor and the battery when selecting only the power receiving apparatus as the source of supply of electric power and the amount of power supplied to the vehicle is greater than the electric power consumed by the motor.

6. The method of supply of electric power to a motor for outputting drive power of a vehicle, in which electric power supply method,
the vehicle comprising:
a battery for storing electric power;
a power receiving apparatus having a power receiving coil for receiving electric power from a power transmitting coil provided at a road; and
an electric power supply circuit configured so as to supply electric power from at least one of the battery and the power receiving apparatus to the motor,
the electric power supply method comprising selecting a source of supply of electric power to the motor from the battery and the power receiving apparatus in accordance with whether the vehicle is running in a power supply area at which the power transmitting coil is provided.

7. An electric power supply apparatus mounted in a vehicle, wherein,
the vehicle comprises:
a battery for storing electric power;
a power receiving apparatus having a power receiving coil for receiving electric power from a power transmitting coil provided at a road;
a motor for outputting drive power of the vehicle; and
an electric power supply circuit configured so as to supply electric power from at least one of the battery and the power receiving apparatus to the motor, and
the electric power supply apparatus is configured to select a source of supply of electric power to the motor from the battery and the power receiving apparatus in accordance with whether the vehicle is running in a power supply area at which the power transmitting coil is provided.

8. The electric power supply apparatus according to claim 7, further configured to select only the power receiving apparatus as the source of supply of electric power when the vehicle is running in the power supply area.

9. The electric power supply apparatus according to claim 7, further configured to select only the power receiving apparatus as the source of supply of electric power when the vehicle is running in the power supply area and a consumed electric power of the motor is less than or equal to a predetermined value and to select the battery and the power receiving apparatus as the source of supply of electric power when the consumed electric power is greater than the predetermined value.

10. The electric power supply apparatus according to claim 8 or 9, wherein
the vehicle selects only the battery as the source of supply of electric power even when the vehicle is running in the power supply area, if trouble arises in supply of power to the vehicle.

11. The electric power supply apparatus according to any one of claims 7 to 9, further configured to supply electric power from the power receiving apparatus to the motor and the battery when selecting only the power receiving apparatus as the source of supply of electric power and the amount of power supplied to the vehicle is greater than the electric power consumed by the motor.
